(19) Europäisches Patentamt
European Patent Office
Office européen des brevets

(11) Publication number: 0 294 998
A1

(12) # EUROPEAN PATENT APPLICATION

(21) Application number: 88304991.8

(51) Int. Cl.4: C08F 210/02 , C08F 4/68

(22) Date of filing: 01.06.88

(30) Priority: 08.06.87 JP 141499/87

(43) Date of publication of application:
14.12.88 Bulletin 88/50

(84) Designated Contracting States:
DE GB IT

(71) Applicant: Nippon Oil Co., Ltd.
3-12, Nishishinbashi 1-chome Minato-ku
Tokyo 105(JP)

(72) Inventor: Yamanashi, Teruaki
3-27-1, Sakaechodori Tsurumi-ku
Yokohama-shi Kanagawa-ken(JP)
Inventor: Yuasa, Hitoshi
2081-16, Kamigocho Sakae-ku
Yokohama-shi Kanagawa-ken(JP)
Inventor: Ozawa, Hiroyuki
262-32, Kamigocho Sakae-ku
Yokohama-shi Kanagawa-ken(JP)
Inventor: Matsuno, Mitsuo
1-12-14, Hino Konan-ku
Yokohama-shi Kanagawa-ken(JP)
Inventor: Satoh, Tetsuo
2-12-2, Denenchofu Ohta-ku
Tokyo(JP)

(74) Representative: Harvey, David Gareth et al
Graham Watt & Co. Riverhead
Sevenoaks Kent TN13 2BN(GB)

(54) **Random copolymer and process for producing same.**

(57) A random copolymer having an intrinsic viscosity of 0.3 - 10 dl/g as measured in decalin at 30°C consists essentially of ethylene and a 2-alkylidene-1,4,5,8-dimethano-1,2,3,4,4a,5,8,8a-octahydronaphthalene compound (ADMON) of the general formula:

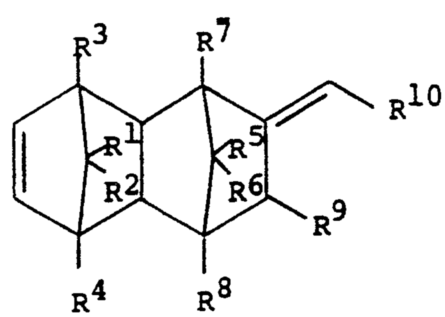

where $R^1$ to $R^{10}$ represent hydrogen atoms or alkyl groups and these radicals may be the same or different. The random copolymer has an ethylene content in the range of 50 to 90 mole percent, and the octahydronaphthalene compound is copolymerized in the form represented by the general formula:

EP 0 294 998 A1

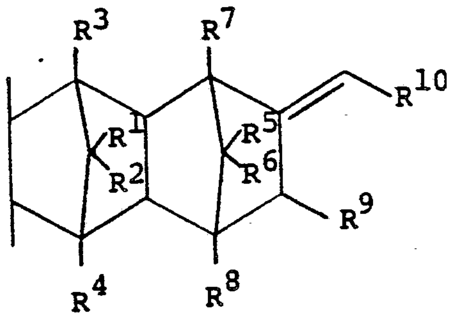

A process for producing such a random copolymer comprises copolymerizing ethylene with an ADMON in a hydrocarbon medium and in the presence of a catalyst formed from a vanadium compound and an organoaluminum compound that are both soluble in hydrocarbon solvents.

# RANDOM COPOLYMER AND PROCESS FOR PRODUCING SAME

This invention relates to a novel random copolymer having excellent optical properties (such as transparency and birefringence), chemical properties (such as thermal stability, heat aging resistance, chemical resistance and solvent resistance), mechanical properties (such as rigidity and impact strength) and electrical properties (such as dielectric properties and corona resistance). The invention also relates to a process for producing such a random copolymer.

More particularly, the invention relates to a random copolymer consisting essentially of ethylene and a 2-alkylidene-1,4,5,8-dimethano-1,2,3,4,4a,5,8,8a-octahydronaphthalene compound and a process for producing it.

Well-known plastics having good transparency include polyethylene terephthalate, polycarbonate, polymethyl methacrylate and the like. Among these plastics, polyethylene terephthalate is cheap and has excellent thermal resistance and mechanical strength, but has the disadvantage of being sensitive to strong acids and alkalies and being subject to hydrolysis. Polycarbonate is a resin having excellent transparency, thermal resistance, heat aging resistance, impact resistance and other properties, but has the disadvantages of being easily attacked by strong alkalies and of having poor chemical resistance. Polymethyl methacrylate has the disadvantages of having poor solvent resistance, thermal resistance and moisture resistance.

On the other hand, many polyolefins have excellent chemcial resistance, solvent resistance, mechanical properties and other properties, but poor thermal resistance. Moreover, since most of them are crystalline, they have low transparency.

Japanese Patent Laid-Open No. 168708/'85 discloses a random copolymer consisting of ethylene and 1,4,5,8-dimethano-1,2,3,4,4a,5,8,8a-octahydronaphthalenes (hereinafter abbreviated as DMON), as well as a process for the production thereof. However, the DMONs disclosed therein are difficult to prepare. Moreover, since the rate of formation of the copolymer of such DMON and ethylene is low, it is difficult to produce the copolymer on an industrial scale.

It is an object of the present invention to provide a novel noncrystalline random copolymer which can be easily produced on an industrial scale without impairing its fundamental properties such as transparency, thermal stability, heat aging resistance, chemical resistance, solvent resistance, dielectric properties, rigidity and impact strength.

It is another object of the present invention to provide a process for producing such a random copolymer which can be readily carried out on an industrial scale.

In order to accomplish the above objects, the present invention provides a random copolymer consisting essentially of ethylene and a 2-alkylidene-1,4,5,8-dimethano-1,2,3,4,4a,5,8,8a-octahydronaphthalene compound (hereinafter abbreviated as ADMON) of the general formula:

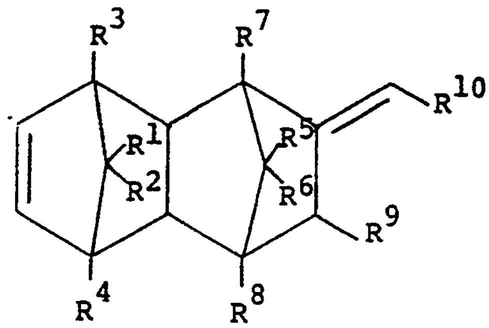

(I)

where $R^1$ to $R^{10}$ represent hydrogen atoms or alkyl groups and these radicals may be the same or different, the random copolymer being characterized in that

(a) its ethylene content is in the range of 50 to 90 mole percent,

(b) the ADMON is copolymerized in the form represented by the general formula:

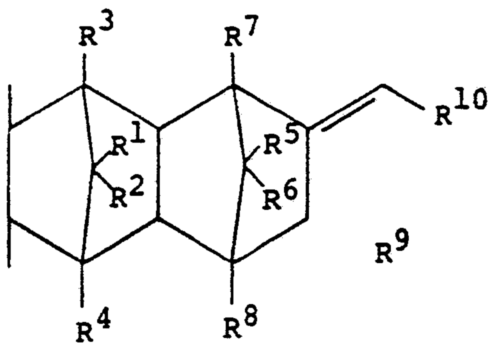

(II)

where $R^1$ to $R^{10}$ are as defined above, and

(c) its intrinsic viscosity [η] is in the range of 0.3 to 10 dl/g as measured in decalin at 30 °C.

The present invention also provides a process for producing a random copolymer consisting essentially of ethylene and an ADMON which comprises copolymerizing ethylene with the ADMON in a hydrocarbon medium and in the presence of a catalyst formed from a vanadium compound and an organoaluminum compound that are both soluble in hydrocarbon solvents.

The invention will now be explained in more detail by way of example in the following non-limitative description. The description refers by way of example to the accompanying drawing, Fig. 1 of which is a chart showing the NMR spectrum of a random copolymer in accordance with the present invention.

## Description of the Preferred Embodiments

The random copolymers of the present invention consist essentially of ethylene and an ADMON represented by the general formula (I). The ethylene content of these copolymers is in the range of 50 to 90 mole percent, preferably 50 to 80 mole percent, and the ADMON content thereof is in the range of 10 to 50 mole percent, preferably 20 to 50 mole percent.

As long as the objects of the present invention are not negated, small amounts of other copolymerizable monomers (such as bicycloheptene compounds other than ADMONs, α-olefins of 3 or more carbon atoms, and aromatic olefins) may be copolymerized with the aforesaid monomers in an amount not greater than 10 mole percent based on the ADMON. Specific examples of such copolymerizable monomers include α-olefins of 3 or more carbon atoms, preferably of 3 to 12 carbon atoms, such as propylene, 1-butene, 3-methyl-1-butene, 1-pentene, 1-hexene and 1-decene; aromatic olefins such as styrene and α-methylstyrene; and bicycloheptene compounds such as bicycloheptene, methylbicycloheptene, ethylbicycloheptene, 2,3,3a,4,7,7a-hexahydro-4,7-methano-1H-indene and 5-ethylidenebicyclo[2.2.1]hept-2-ene.

The results of $^1$H-NMR analysis (as shown in Fig. 1) and infrared spectrophotometric analysis indicate that, in the aforesaid copolymers, the ADMON is copolymerized principally in the form represented by the formula:

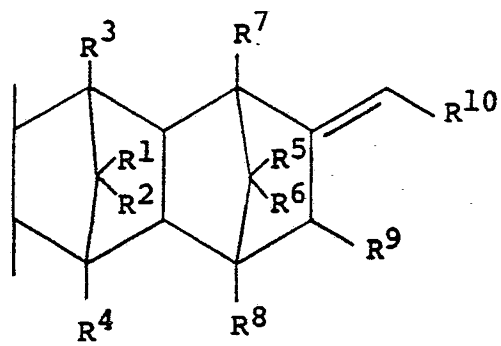

where $R^1$ to $R^{10}$ are as defined above.

The random copolymers of the present invention have a molecular weight which is represented by an intrinsic viscosity [η] of 0.3 to 10 dl/g as measured in decalin at 30 °C.

Generally, the random copolymers of the present invention have no or low crystallinity and, therefore,

exhibit good transparency. Most of them have a degree of crystallinity not greater than 5% as measured by X-ray diffraction analysis, and exhibit no melting point in analysis with a differential scanning calorimeter (DSC).

The copolymers of the present invention usually have a glass transition temperature (Tg) of 80 to 220°C as measured by thermochemical analysis, indicating clearly that they have excellent thermal stability.

The copolymers of the present invention are excellent, not only in transparency and thermal stability, but also in mechanical properties, dielectric properties, chemical resistance, solvent resistance and other properties because of the absence of any component having a polar group. Accordingly, they can be used in optical applications (including optical discs, optical lenses, optical fibers, LEDs and windowpanes), electrical applications (including microwave ovens, cassette tape housings, and lampshades), medical and chemical applications (including syringes, bottles and pipettes) and the like.

When the copolymers of the present invention are used in these applications, they can be formed according to any of conventional methods. If it is desired for such purposes, the copolymers of the present invention may further contain well-known additives such as antioxidants, light stabilizers, antistatic agents, anti-fogging agents, lubricants, anti-blocking agents, fillers and colorants.

Further, the copolymers of the present invention may be blended with various well-known polymers. Such well-known polymers include, for example, polyolefins such as polyethylene, polypropylene, polybutene-1, poly(4-methyl-1-pentene), polyisoprene, polybutadiene, polystyrene, ethylene-propylene copolymer, styrene-butadiene copolymer, terpolymers of ethylene, propylene and 5-ethylidenebicyclo-[2.2.1]hept-2-ene, or a other nonconjugated diene (e.g., dicyclopentadiene or 1,4-hexadiene); halogenated vinyl polymers such as polyvinyl chloride, polyvinylidene chloride and polyvinyl fluoride; polar vinyl polymers such as polyacrylate, polymethacrylate, polyacrylonitrile, polyvinyl alcohol and polyvinyl acetate; polyacetals; polyphenylene oxides; polycarbonates; polysulfones; polyesters; and polyamides.

The copolymers of the present invention can be produced by copolymerizing ethylene with an ADMON in the presence of a catalyst formed from vanadium compounds and organoaluminum compounds.

The ADMONs which are useful in producing the copolymers of the present invention have the advantage that they have better copolymerizability with ethylene than DMONs. This advantage will be more fully explained with reference to related facts.

It is well known that, when a bicycloheptene compound such as 5-ethylidenebicyclo[2.2.1]hept-2-ene or dicyclopentadiene is copolymerized with ethylene and propylene by anionic coordination polymerization using a vanadium catalyst, the bicycloheptene compound only occupies the position next to ethylene, and the position next to the bicycloheptene compound is occupied only by ethylene. Moreover, it is also well-known that 5-ethylidenebicyclo[2.2.1]hept-2-ene has better copolymerizability than dicyclopentadiene. The reason why the former compound has better copolymerizability is that the side chain of 5-ethylidenebicyclo-[2.2.1]hept-2-ene (i.e. ethylidene moiety) extends nearly to the exo direction. On the other hand, dicyclopentadiene has exo- and endo-isomers but consists mainly of the endo-isomer in which the side ring constituting a five-membered ring extends downward. It is believed that this five-membered ring extending downward causes steric hindrance and makes it difficult to copolymerize dicyclopentadiene with ethylene.

Conventional DMONs (for example, 1,4,5,8-dimethano-1,2,3,4,4a,5,8,8a-octahydronaphthalene, 2-ethyl-1,4,5,8-dimethano-1,2,3,4,4a,5,8,8a-octahydronaphthalene, 2,3-diethyl-1,4,5,8-dimethano-1,2,3,4,4a,5,8,8a-octahydronaphthalene and pentacyclo$[6,5,1^{1,8},1^{3,6},0^{2,7},0^{9,13}]$-4-pentadecene) are more subject to steric hindrance than the aforesaid dicyclopentadiene. Thus, it is more difficult to copolymerize them with ethylene.

In contrast, ADMONs have to have a steric configuration different from that of conventional DMONs. That is, not yet completely analyzed ADMONs seem to consist mainly of an isomer in which two rings are joined on the exo side at the 4a-8a position of the dimethanonaphthalene ring, and exhibit the same degree of copolymerizability with ethylene as the aforesaid 5-ethylidenebicyclo[2.2.1]hept-2-ene.

Thus, the present inventors have found that ADMONs have much better copolymerizability than conventional DMONs, that ADMONs can easily produce copolymers having a desirable composition, and that the polymerization procedure for ADMONs is not only simple but also economically advantageous.

Another feature of ADMONs is that they can be more readily synthesized than DMONs. This feature will be fully discussed hereinbelow. Usually, DMONs are synthesized by the Diels-Alder reaction of a norbornene compound with cyclopentadiene as shown by the following equation:

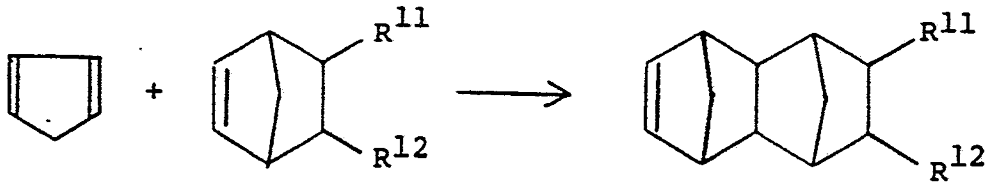

The norbornene compound used as a starting material in this synthesis must not have an unsaturated bond other than the double bond in the norbornene ring. That is, norbornene derivatives such as norbornadiene, dicyclopentadiene and 5-vinylbicyclo[2.2.1]hept-2-ene cannot be used as starting materials. The reason for this is that, when the DMONs formed from such norbornene derivatives (for example, tricyclopentadiene formed from dicyclopentadiene according to the following equation) are copolymerized with ethylene, only a gelled polymer insoluble in solvents is produced.

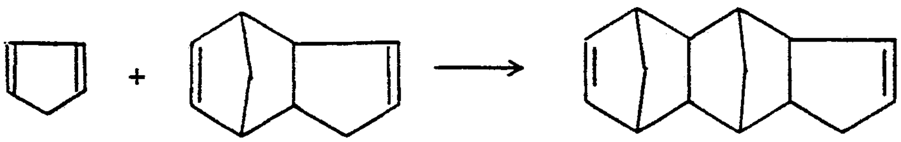

Accordingly, where dicyclopentadiene is used as the starting norbornene compound in the synthesis of DMONs, it is necessary to hydrogenate the double bond in the five-membered ring. However, hydrogenation of dicyclopentadiene yields two compounds (A) and (B) as shown by the following equation:

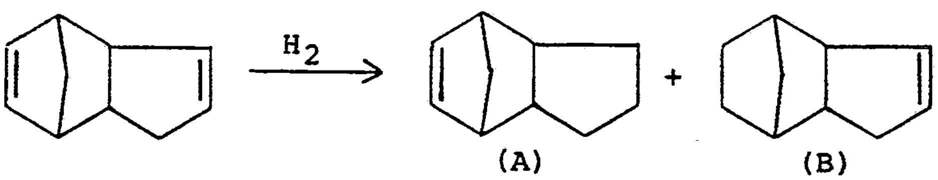


(A) (B)

What is worse, the compound (B) having the hydrogenated norbornene ring is produced in larger amounts, and the desired compound (A) is not obtained in satisfactorily high yield.

For these reasons, norbornene compounds having a single double bond in the norbornene ring (such as norbornene, methylnorbornene or ethylnorbornene) are used as starting materials in the synthesis of DMONs. In this case, however, great difficulties are encountered in preparing such norbornene compounds. That is, these compounds are obtained by the Diels-Alder reaction of cyclopentadiene with ethylene, propylene or butene-l, but this reaction requires severe conditions including elevated temperature, high pressure and long time. Thus, these norbornene compounds cannot be obtained readily and inexpensively.

In contrast, ADMONs can be easily obtained by the Diels-Alder reaction of cyclopentadiene compounds (or dicyclopentadiene compounds that are the dimers thereof) with alkylidenebicyclo[2.2.1]hept-2-ene compounds such as 5-ethylidenebicyclo[2.2.1]hept-2-ene, and can be easily purified by simple distillation procedures. Although ADMONs have an additional double bond in the alkylidene group, this double bond is entirely inert to the copolymerization reaction and exerts no inhibitory effect thereon.

Among the ADMONs having the above-described advantages and useful in the practice of the present invention, there are preferably used ADMONs of the general formula (I) in which $R^1$ to $R^{10}$ to represent hydrogen atoms or alkyl groups of 1 to 5 carbon atoms and these radicals may be the same or different. It is more preferable to use an ADMON in which $R^1$ to $10^{10}$ are hydrogen atoms, or an ADMON in which any one of $R^1$ to $R^4$ is a methyl group, and/or any one of $R^5$ to $R^8$ is a methyl group, and $R^9$ and/or $R^{10}$ are hydrogen atoms or alkyl groups of 1 to 5 carbon atoms. Specific examples of useful ADMONs include 2-ethylidene-1,4,5,8-dimethano-1,2,3,4,4a,5,8,8a-octahydronaphthalene (hereinafter abbreviated as EDMON), 2-ethylidene-3-methyl-1,4,5,8-dimethano-1,2,3,4,4a,5,8,8a-octahydronaphthalene, 2-ethylidene-3-ethyl-1,4,5,8-dimethano-1,2,3,4,4a,5,8,8a-octahydronaphthalene, 2-ethylidene-3-isopropyl-1,4,5,8-dimethano-1,2,3,4,4a,5,8,8a-octahydronaphthalene, 2-ethylidene-3-butyl-1,4,5,8-dimethano-1,2,3,4,4a,5,8,8a-octahydronaphthalene, 2-n-propylidene-1,4,5,8-dimethano-1,2,3,4,4a,5,8,8a-octahydronaphthalene (hereinafter abbreviated as PDMON), 2-n-propylidene-3-methyl-1,4,5,8-dimethano-1,2,3,4,4a,5,8,8a-octahydronaphthalene, 2-n-propylidene-3-ethyl-1,4,5,8-dimethano-1,2,3,4,4a,5,8,8a-octahydronaphthalene, 2-n-propylidene-3-isopropyl-1,4,5,8-dimethano-1,2,3,4,4a,5,8,8a-octahydronaphthalene, 2-n-propylidene-3-butyl-1,4,5,8-dimethano-1,2,3,4,4a,5,8,8a-octahydronaphthalene, 2-isopropylidene-1,4,5,8-dimethano-1,2,3,4,4a,5,8,8a-octahydronaphthalene (hereinafter abbreviated as IPDMON), 2-isopropylidene-3-methyl-1,4,5,8-dimethano-1,2,3,4,4a,5,8,8a-octahydronaphthalene, 2-isopropylidene-3-ethyl-1,4,5,8-dimethano-1,2,3,4,4a,5,8,8a-octahydronaphthalene, 2-isopropylidene-3-isopropyl-1,4,5,8-dimethano-1,2,3,4,4a,5,8,8a-octahydronaphthalene and 2-isopropylidene-3-butyl-1,4,5,8-dimethano-1,2,3,4,4a,5,8,8a-octahydronaphthalene.

The vanadium compounds which can be used as a catalyst component for the copolymerization of such ADMONs with ethylene include, for example, $VCl_4$, $VBr_4$, $VOCl_3$, $VOBr_3$, $VO(OR)_3$ and $VO(OR)_nX_{3-n}$, where R is a hydrocarbon radical of 1 to 20 carbon atoms, X is a halogen, and $0 < n < 3$. Among these vanadium compounds, it is preferable to use $VO(OR)_nX_{3-n}$ or a mixture of a vanadium oxyhalide and $VO(OR)_3$.

The organoaluminum compounds which can be used as another catalyst component include compounds of the general formula $R'_mAlX'_{3-m}$, where R′ is an aliphatic or cycloaliphatic hydrocarbon radical, X′ is a halogen, and $0 < m \leq 3$. In this formula, the aliphatic or cycloaliphatic hydrocarbon radical represented by R′ preferably has 1 to 6 carbon atoms. Specific examples of such organoaluminum compounds include trialkylaluminums such as trimethylaluminum, triethylaluminum, triisobutylaluminum and tricyclohexylaluminum; dialkylaluminum halides such as diethylaluminum chloride, diethylaluminum bromide and diethylaluminum iodide; alkylaluminum dihalides such as ethylaluminum dichloride, ethylaluminum dibromide and ethylaluminum diiodide; and alkylaluminum sesquihalides such as ethylaluminum sesquichloride, ethylaluminum sesquibromide and ethylalauminum sesquiiodide. These organoaluminum compounds may be used alone, or by mixing two or more in any desired proportion.

The copolymerization reaction is carried out according to the slurry polymerication or solution polymerization technique using a hydrocarbon as the medium. The hydrocarbons which can be used as the medium include hexane, heptane, octane, cyclohexane, pentane, toluene and xylene.

In the catalyst used for this copolymerization reaction, the organoaluminum compound and the vanadium compound are present in a molar ratio ranging from 2:1 to 30:1 and preferably from 2:1 to 20:1.

As to the concentrations of the catalyst components used for the copolymerication reaction, the concentration of the vanadium compound is in the range of 0.1 to 20 millimoles per liter, and that of the organoaluminum compound is adjusted to 0.2 to 600 millimoles per liter, preferably 2 to 400 millimoles per liter, so as to come within the aforesaid molar ratio range. The concentrations of ethylene and ADMON in the medium may vary according to the type of the medium, the reaction temperature and the intended composition of the copolymer. However, the concentration of ADMON is desirably in the range of 0.05 to 4 moles per liter. On the other hand, the concentration of ethylene is desirably adjusted to 1/100 to 1 times that of ADMON, because too high concentrations of ethylene will cause the formation of ethylene homopolymer.

Preferably, the polymerization temperature is in the range of -30 to 80°C and the polymerication pressure is in the range of 0.1 to 50 kg/cm$^2$ as expressed in terms of absolute pressure. If desired, a molecular weight modifier such as hydrogen may be used for the purpose of controlling the molecular weight of the copolymer.

Further, as stated above, copolymers containing other components within the limits of the content which does not negate the objects of the present invention can also be obtained by carrying out the copolymerization reaction in the presence of small amounts of other copolymericable monomers.

As described in detail above, the present invention provides novel noncrystalline random copolymers which have excellent fundamental properties such as transparency, thermal stability heat aging resistance, chemical resistance, solvent resistance, dielectric properties, rigidity and impact strength and which can be easily produced on an industrial scale.

The present invention is further illustrated by the following examples. However, these examples are not to be construed to limit the scope of the invention.

Example 1

A well-dried four neck flask having a capacity of 1 liter was fitted with a stirrer, a gas inlet tube, a thermometer and a three-way cock, and thoroughly purged with nitrogen.

This flask was charged with 800 milliliters of dry toluene. Then, 1.6 millimoles of vanadyl chloride, 26.9 grams of EDMON and 16 millimoles of ethylaluminum sesquichloride were added thereto under an atmosphere of nitrogen.

Into the flask maintained at 10°C, a gas mixture consisting of 32 liters/hr of ethylene and 128 liters/hr of nitrogen was introduced through the gas inlet tube for 40 minutes.

The copolymerization reaction proceeded with the reaction mixture remaining homogeneous and clear,

and no precipitation of polymeric material was noted.

Then, the copolymerization reaction was stopped by adding 10 milliliters of methanol.

After the reaction was stopped, the reaction mixture was poured into isopropanol containing 0.05% of hydrochloric acid to precipitate the product. The resulting precipitate was separated, washed with isopropanol and then dried for 24 hours to obtain 21.9 g of a copolymer.

This copolymer had an intrinsic viscosity [η] of 2.1 dl/g as measured in decalin at 30° C. $^1$H-NMR analysis revealed that the copolymer contained 23 mole percent of EDMON.

When tested with a thermochemical analyzer (Model TMA DT-30; manufactured by Shimadzu Corp.), the copolymer had a glass transition temperature (Tg) of 139° C. Moreover, when tested with a differential scanning calorimeter (Model DSC-20; manufactured by Seiko Electronic Industries Co., Ltd.), the copolymer showed no heat absorption representative of its melting point (Tm). Its light transmittance was 88%.

Example 2

Polymerization was carried out in the same manner as described in Example 1, except that vanadyl chloride used as the catalyst component was replaced by a mixture of vanadyl chloride and vanadyl ethoxide in a molar ratio of 1:1. As a result, 17.1 grams of a copolymer was obtained. This copolymer contained 31 mole percent of EDMON and had an intrinsic viscosity [η] of 2.4 dl/g as measured in decalin at 30° C. It had a Tg of 157° C and showed no Tm in DSC analysis. Its light transmittance was 89%.

Example 3

Polymerization was carried out in the same manner as described in Example 1, except that vanadyl chloride used as the catalyst component was replaced by vanadyl ethoxide. As a result, 14.4 grams of a copolymer was obtained. This copolymer contained 27 mole percent of EDMON and had an intrinsic viscosity [η] of 0.9 dl/g as measured in decalin at 30° C. It had a Tg of 143° C and showed no Tm in DSC analysis.

Example 4

Polymerication was carried out in the same manner as described in Example 2, except that EDMON was replaced by IPDMON. As a result, 15.3 grams of a copolymer was obtained. This copolymer contained 29 mole percent of IPDMON and had an intrinsic viscosity [η] of 2.1 dl/g as measured in decalin at 30° C. It had a Tg of 151° C and showed no Tm in DSC analysis. Its slight transmittance was 88%.

Comparative Example 1

Polymerization was carried out in the same manner as described in Example 2, except that EDMON was replaced by 2-ethyl-1,4,5,8-dimethano-1,2,3,4,4a,5,-8,8a-octahydronaphthalene (EtDMON). As a result, 15.5 grams of a copolymer was obtained. This copolymer contained 24 mole percent of EtDMON and had an intrinsic viscosity [η] of 1.3 dl/g as measured in decalin at 30° C. It had a Tg of 110° C and showed no Tm in DSC analysis. Its light transmittance was 82%.

Comparative Example 2

Polymerization was carried out in the same manner as described in Example 2, except that EDMON was replaced by tricyclopentadiene. As a result, 14.5 grams of a copolymer was obtained. This copolymer was gelled to a considerable degree. The greater part of the copolymer was insoluble in decalin.

Comparative Example 3

Polymerization was carried out in the same manner as described in Example 2, except that 2-vinyl-1,4,5,8-dimethano-1,2,3,4,4a,5,8,8a-octahydronaphthalene (VDMON) was synthesized according to the following equation and used in place of EDMON:

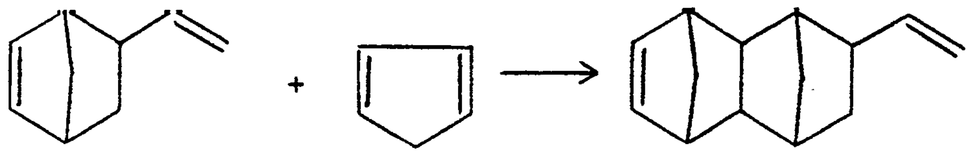

As a result, 6.3 grams of a copolymer was obtained. However, its VDMON content was as low as 15 mole percent of VDMON, and its molecular weight was low, as represented by an instrinsic viscosity [$\eta$] of 0.28 dl/g.

## Claims

1. A random copolymer consisting essentially of ethylene and a 2-alkylidene-1,4,5,8-dimethano-1,2,3,4,4a,5,8,8a-octahydronaphthalene compound of the general formula:

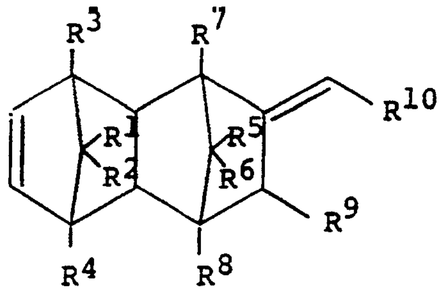

(I)

where $R^1$ to $R^{10}$ represent hydrogen atoms or alkyl groups and these radicals may be the same or different, the random copolymer being characterized in that

(a) its ethylene content is in the range of 50 to 90 mole percent,

(b) the octahydronaphthalene compound is copolymerized in the form represented by the general formula:

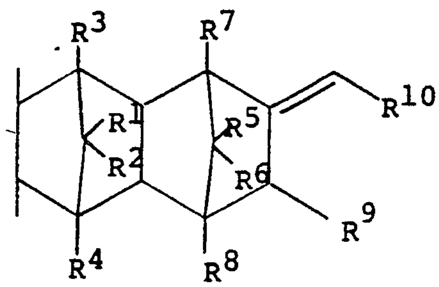

(II)

where $R^1$ to $R^2$ are as defined above, and

(c) its intrinsic viscosity [$\eta$] is in the range of 0.3 to 10 dl/g as measured in decalin at 30 °C.

2. A random copolymer as claimed in claim 1 wherein, in the general formula (I), $R^1$ to $R^{10}$ independently represent hydrogen atoms or alkyl groups of 1 to 5 carbon atoms.

3. A random copolymer as claimed in claim 1 wherein the octahydronaphthalene compound is 2-ethylidene-1,4,5,8-dimethano-1,2,3,4,4a,5,8,8a-octahydronaphthalene or 2-isopropylidene-1,4,5,8-dimethano-1,2,3,4,4a,5,8,8a-octahydronaphthalene.

4. A process for producing a random copolymer as claimed in claim 1 which comprises copolymerizing ethylene with a 2-alkylidene-1,4,5,8-dimethano-1,2,3,4,4a,5,8,8a-octahydronaphthalene compound of the general formula:

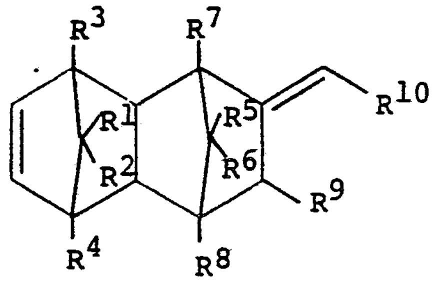

(I)

where $R^1$ to $R^{10}$ represent hydrogen atoms or alkyl groups and these radicals may be the same or different, in a hydrocarbon medium and in the presence of a catalyst formed from a vanadium compound and an organoaluminum compound that are both soluble in hydrocarbon solvents.

5. A process as claimed in claim 4 wherein the vanadium compound is a compound of the general formula:

$VO(OR)_nX_{3-n}$

where R is a hydrocarbon radical of 1 to 20 carbon atoms, X is a halogen and $0 \leq n \leq 3$.

6. A process as claimed in claim 4 wherein the organoaluminum compound is a compound of the general formula:

$R'_mAlX'_{3-m}$

where R′ is an aliphatic or cycloaliphatic hydrocarbon radical, X′ is a halogen, and $0 < m \leq 3$.

7. A process as claimed in claim 6 wherein the concentration of the octahydronaphthalene compound is in the range of 0.05 to 4 moles per liter of the hydrocarbon medium, and the concentration of ethylene is adjusted to 1/100 to 1 times that of the octahydronaphthalene compound.

F I G.1

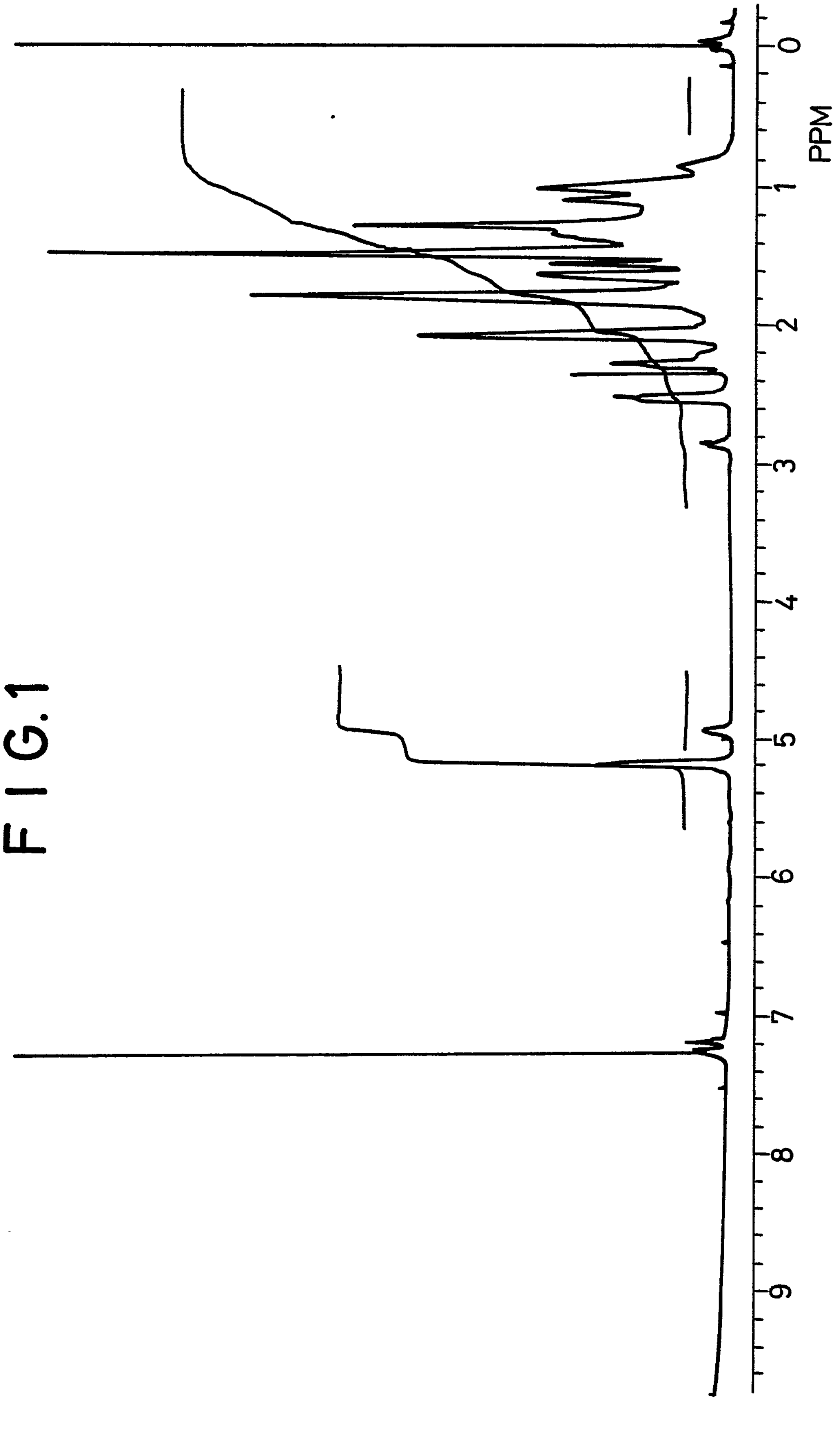

European Patent Office

# EUROPEAN SEARCH REPORT

Application Number

EP 88 30 4991

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CHEMICAL ABSTRACTS, vol. 78, 1973, page 54, no. 44785z, Columbus, Ohio, US; & JP-A-72 31 970 (HITACHI CHEMICAL CO., LTD) 14-11-1972<br>* Abstract * | 1 | C 08 F 210/02<br>C 08 F 4/68 |
| D,A | EP-A-0 156 464 (MITSUI PETROCHEM)<br>* Claims * | 1 | |
| | | | **TECHNICAL FIELDS SEARCHED (Int. Cl.4)** |
| | | | C 08 F |

The present search report has been drawn up for all claims

| Place of search | Date of completion of the search | Examiner |
|---|---|---|
| THE HAGUE | 30-08-1988 | DE ROECK R.G. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)